# EUROPEAN PATENT APPLICATION

(11) **EP 0 992 337 A2**
(43) Date of publication of application: **12.04.2000**
(21) Application number: 99118646.1
(22) Date of filing: 21.09.1999
(51) Int. Cl.: B30B 11/20

(54) **Stationary die pellet mill**

(30) Priority: 08.10.1998 US 103480 P; 16.11.1998 US 192436 P
(71) Applicant: Consolidated Process Machinery Inc., Merrimack, New Hampshire 03054 (US)
(72) Inventor: Thom, Jr., Kelsey C., New Hampshire 03052 (US); Smith, S. Andrew, New Hampshire 03060 (US)
(74) Representative: Lundquist, Lars-Olof

(57) **Abstract**

The pellet mill includes a stationary ring die (12) defining a die cavity which receives a rotatable carriage (24) mounting a plurality of rollers (22) defining nips with the interior surface of the ring die. An inlet (42) receives feed material which is advanced toward the die cavity by an auger (46). The auger drives the feed material past conveying blades and an impeller which expels the feed material in a conical spray pattern toward the die cavity. The conical spray pattern is assisted by a cone (64) rotating with the roller carriage (24) which has vanes (70) for driving the feed material into the roller and ring die nips. A torque limiter (38) is disposed between the motor driving the carriage and the carriage shaft (30) to preclude damage to the motor and mechanical damage in the event of an overload on the shaft. The pellets are thus extruded through the die openings of the fixed ring die (12) and discharged from the housing without damage.

## Description

### RELATED APPLICATIONS

This application claims the benefit of U.S. Provisional Application No. 60/103,480, filed October 8, 1998.

### TECHNICAL FIELD

The present invention relates to a pellet mill for agglomerating individual ingredients or mixtures (feed material) by compacting and forcing the ingredients or mixtures through die openings and particularly relates to a pellet mill having a stationary ring die to minimize or eliminate pellet damage in applications sensitive to impact forces.

### BACKGROUND OF THE INVENTION

Conventional pellet mills typically employ a rotating ring die with stationary rollers within a die cavity defined by the ring die for extruding the feed material within the cavity through the openings of the ring die to form pellets. Particularly, the feed material is first fed by gravity from a feed chute into a feed cone attached to the front of the ring die and deflectors scrape the cone, directing the feed material into the die pelleting area. The fixed rollers rotate within the die cavity close against the inside of the ring die, causing the feed material to be extruded to the outside diameter of the die and to break off as discrete pellets. The pellets, however, are thrown from the die outside diameter by centrifugal force against the housing surrounding the ring die. The individual pellets are typically soft from the heat of extrusion and can be damaged when the pellets impact the housing. As demands for additional capacity increase and larger dies are used with higher operational speeds , the centrifugal forces increase and pellet damage becomes an issue.

### BRIEF SUMMARY OF THE INVENTION

In accordance with the present invention, a pellet mill is provided which reduces pellet damage in applications sensitive to impact forces with the beneficial result that higher pelleting capacity at reduced costs can be achieved. To accomplish this, the present invention provides a fixed or stationary ring die and a plurality of rollers mounted on a roller carriage are disposed within the cavity defined by the ring die. The carriage is rotatable about the axis of the ring die with the rollers bearing against the inside die surface of the ring die. A cone is attached to the carriage for rotation with the carriage and preferably carries a plurality of vanes for directing the feed material into the nips of the rollers and ring die for extrusion through the stationary ring die openings.

The feed material input to the pellet mill first passes through an auger, then through rotating angled blades for conveying the feed material without conveying a large amount of air and finally through an impeller. Because the auger blades and impeller are coaxial with the carriage, the feed material flows into the die cavity in the form of a conical spray wherein the cone has an axis coincident with the carriage axis. In this manner, the feed material is directed substantially uniformly about the die cavity for location in the nips of the rollers and the ring die. Also, to prevent mechanical damage to the pellet mill, a torque limiter is interposed between the motor for rotating the carriage and the carriage shaft whereby the drive motor can be decoupled from the shaft.

In a preferred embodiment according to the present invention, there is provided a pellet mill, comprising a stationary ring die defining a die cavity and having circumferentially and axially spaced die openings, a carriage carrying a plurality of rollers in the die cavity, the rollers being mounted on axes parallel to an axis of the ring die, a drive for rotating the carriage about the axis of the ring die, an inlet for receiving feed material, a feeder for advancing the feed material toward the die cavity, a tapered feed cone rotatable with the carriage for receiving the feed material from the feeder and directing the feed material into nips between the rollers and ring die for extruding pellets of feed material through the openings and an outlet for receiving the pellets extruded through the die openings and discharging pellets from the pellet mill.

In a further preferred embodiment according to the present invention, there is provided a pellet mill, comprising a stationary ring defining a die cavity and having circumferentially and axially spaced die openings, a carriage carrying a plurality of rollers in the die cavity, the rollers being mounted on axes parallel to an axis of the ring die, a drive for rotating the carriage about the axis of the ring die, an inlet for receiving feed material, a feeder for advancing the feed material toward the die cavity and including an auger and an impeller having circumferentially spaced blades extending in a general axial direction for directing the feed material into nips between the rollers and ring die for extruding pellets of feed material through the openings and an outlet for receiving the pellets extruded through the die openings and discharging the pellets from the pellet mill.

Accordingly, it is a primary object of the present invention to provide a pellet mill having a stationary die ring for minimizing or eliminating damage to the pellets thereby providing increased capacity at reduced costs.

### BRIEF DESCRIPTION OF THE DRAWINGS

FIGURE 1 is a fragmentary side elevational view with portions in cross-section of a stationary die pellet mill according to the present invention; and
FIGURES 2, 3 and 4 are cross-sectional views thereof taken generally about on lines 2-2, 3-3 and 4-4, respectively, in Figure 1.

### BEST MODE FOR CARRYING OUT THE INVENTION

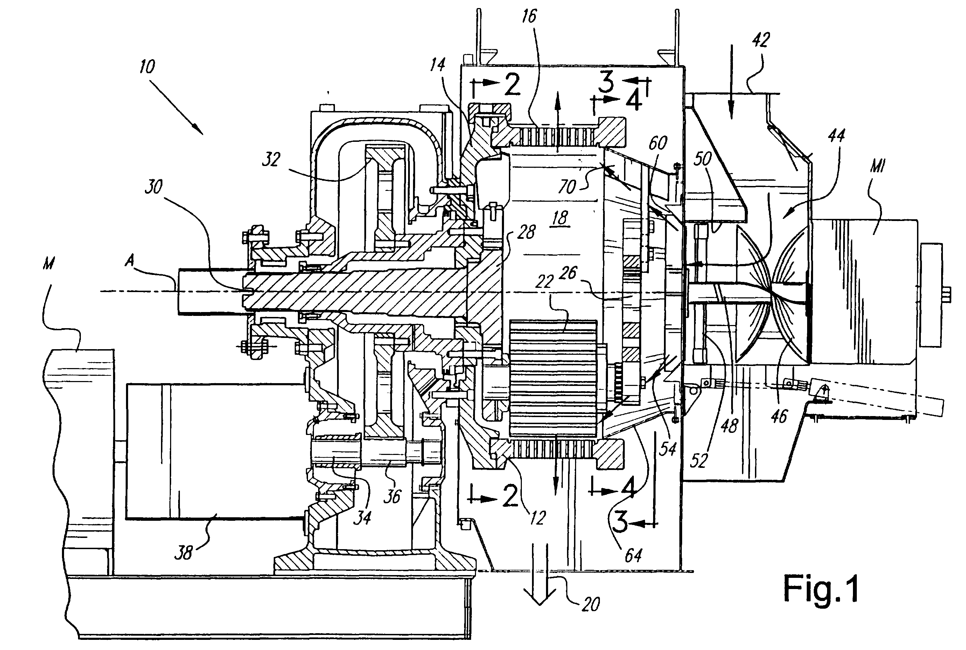

Referring to the drawings, particularly to Figure 1, there is illustrated a stationary die pellet mill, generally designated 10, including a stationary ring die 12. The ring die 12 is fixed or is stationary in a pellet mill housing 14 and mounted such that its axis A lies horizontally. Ring die 12 includes a plurality of circumferentially and axially spaced die openings 16 extending radially outwardly through the die. Product passes through the openings 16 from a ring die cavity 18 defined within and by the ring die 12 for extrusion radially outwardly into a collector housing about the ring die for flow through an outlet indicated by the arrow 20 in Figure 1. The ring die 12 is *per se* of conventional construction.

Within die cavity 18, there are provided a plurality of rollers 22, in this instance, three being illustrated, carried by a roller carriage 24 including a front roller support 26 and a rear roller support 28. The carriage 24 is mounted on a rear shaft 30 carried by suitable bearings in the housing 14. A direct gear drive system is provided for driving shaft 30 and includes large gear 32 mounted on and about shaft 30 and a drive shaft 34 mounting a gear 36 engaging large gear 32. Gear 34 is driven by a motor M through a torque limiter 38. The torque limiter is interposed between the motor M and the shaft 30 to decouple the motor from the shaft in the event of an overload condition on the carriage 24. The torque limiter 38 is of conventional construction. As a consequence, motor M drives the shaft 30 through the torque limiter 38, and gears 36 and 32 and which shaft 30, in turn, rotates the carriage 24 within the die cavity 18.

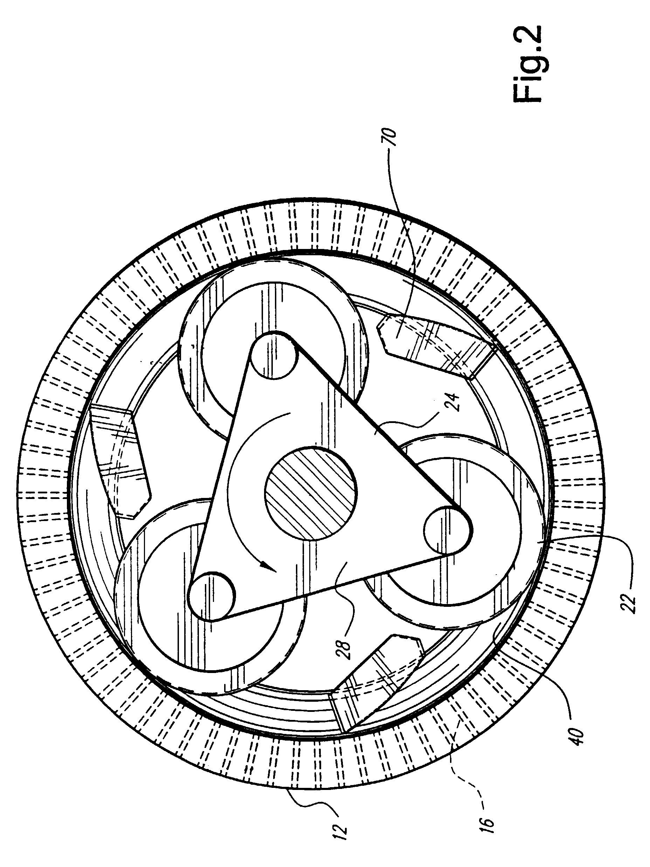

As can be seen particularly from drawing Figures 1 and 2, the rollers 22 form nips 40 with the interior surface of the stationary die ring 12. Consequently, feed material disposed in the die cavity 18 is extruded through the die openings 16 in response to rotation of the rollers about the die cavity.

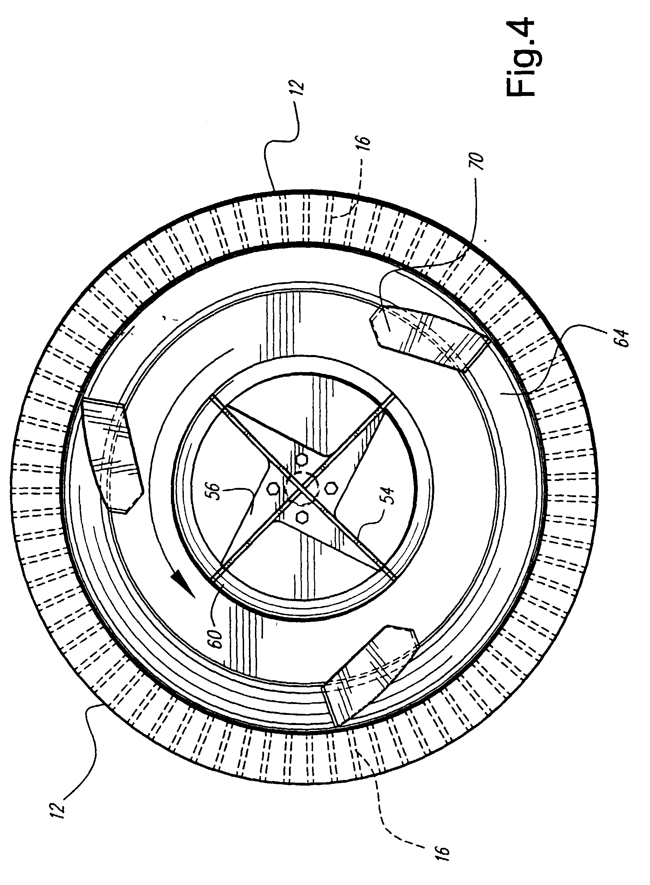

Referring back to Figure 1, an inlet 42 is provided on the front of the machine for receiving feed material from a suitable source, not shown, the feed material being fed downwardly into a feeder, generally designated 44. The feeder 44 includes a short axial auger 46 mounted on a shaft 48 coaxial with but not forming a part of shaft 30. Downstream of the auger 46 in a generally horizontally disposed feed inlet channel 50, there is provided a plurality of conveying blades 52 for accelerating the feed material. Downstream of the conveying blades 52, there is provided an impeller 54 comprised of a plurality of blades, four being illustrated, which extend in a generally axial direction and have flat blade portions 56 perpendicular to the axis of shaft 48, as best illustrated in Figure 4. The rear tips of the blades 54 are angled to rotate past a tapered feed material entry surface 60 (Figure 1). The shaft 48 is driven by a separate motor M1 provided on the front of the pellet mill.

From the foregoing description of the feed system, it will be appreciated that product flows through inlet 42 and is driven in a horizontal direction towards die cavity 18 by the auger 46. The arrangement of the auger, conveying blades and impeller blades 54 provides a substantially uniform conical spray pattern of the feed material as it is displaced horizontally toward the die cavity 18. The feed material is fed into a rotating cone 64 which guides the product in its conical pattern toward the inside diameter of the ring die 12 and toward the nips 40 between the rollers 22 and ring die 12.

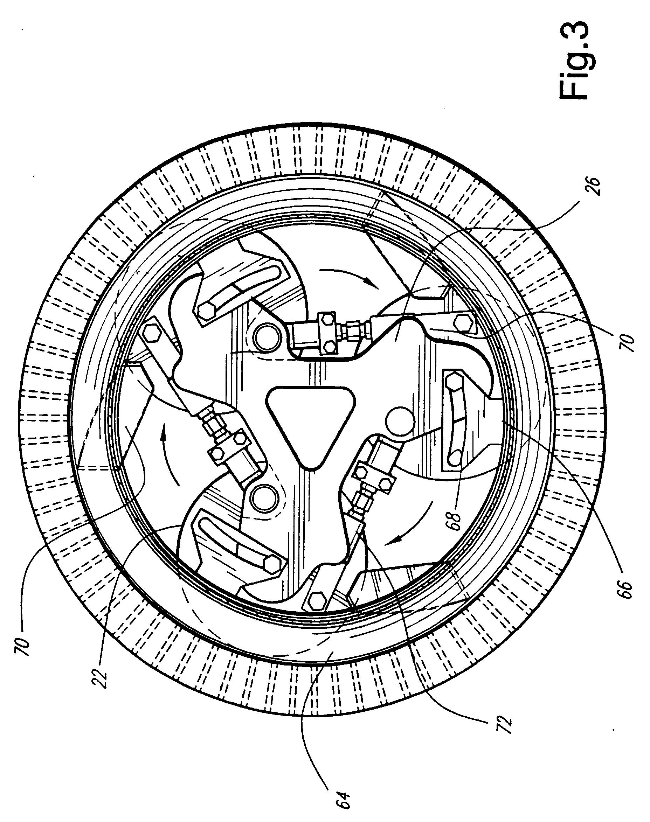

The cone 64 is mounted for rotation with the carriage 24 by the front roller support 26. Particularly, the front roller support carries a plurality of tabs 66 (Figure 3). Each tab 66 is adjustable via a slot 68 and bolt 70 arrangement relative to the front roller support 26. The cone 64 is secured to the radial outer ends of the tabs 66. Thus, the cone 64 can be rotated or clocked relative to the rollers 22. The cone 64 preferably includes a plurality of circumferentially spaced vanes 70 which drive the feed material toward the nips 30 between the rollers 22 and fixed ring die 12. The turnbuckles 72 illustrated in Figure 3 are employed to adjust the rollers 22 relative to the carriage and to the ring die such that the location of the nips 30 can be advanced or retracted about the ring die.

In operation, feed material is disposed in the inlet 42 for disposition in the channel 50. The auger 46 advances the feed material toward the die cavity 18, while the blades 52 convey and accelerate the material and the impeller blades 54 spray the material toward the cavity 18 in a conical pattern and onto the interior surfaces of the rotating cone 64. The vanes 70 of the rotating cone 64 direct the feed material in the spray pattern toward the nips 40 between the rollers 22 and the stationary die 12. When the feed material lies in the nips 40, the rotation of the rollers 22 within the die cavity 18 extrude the feed material through the die opening 16, forming pellets. The pellets egress from the pellet mill through the discharge opening 20. It will be appreciated that the torque limiter 38 will decouple the carriage from the motor M in the event of an overload on the carriage shaft 30, thus protecting the motor and ancillary mechanical parts. By forming the pellet mill with a stationary ring die, it will be appreciated that centrifugal forces on the formed pellets are entirely eliminated and accordingly, damage to the pellets as the result of such centrifugal forces, i.e., consequent of a conventional rotating ring die, are wholly eliminated.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A pellet mill, comprising:
a stationary ring die defining a die cavity and having circumferentially and axially spaced die openings;
a carriage carrying a plurality of rollers in said die cavity, said rollers being mounted on axes parallel to an axis of the ring die;
a drive for rotating said carriage about the axis of the ring die;
an inlet for receiving feed material;
a feeder for advancing the feed material toward the die cavity;
a tapered feed cone rotatable with said carriage for receiving the feed material from said feeder and directing the feed material into nips between the rollers and ring die for extruding pellets of feed material through said openings; and
an outlet for receiving the pellets extruded through the die openings and discharging pellets from the pellet mill.

2. A pellet mill according to Claim 1 including vanes carried by said rotating cone for directing product toward the nips of the rollers and the ring die.

3. A pellet mill according to Claim1 wherein said feeder comprises an auger.

4. A pellet mill according to Claim 1 wherein said feeder comprises an impeller having circumferentially spaced blades extending in a general axial direction.

5. A pellet mill according to Claim 1 wherein said feeder includes a plurality of conveying blades.

6. A pellet mill according to Claim 1 wherein said feeder comprises an auger, a plurality of conveying blades downstream of said auger and an impeller downstream of said conveying blades.

7. A pellet mill according to Claim 1 wherein said drive includes a main driveshaft, a motor for driving the shaft and a torque limiter interposed between the motor and shaft for decoupling the motor from the shaft in response to an overloaded shaft.

8. A pellet mill according to Claim 7 wherein said feeder comprises an auger, a plurality of conveying blades downstream of said auger and an impeller downstream of said conveying blades.

9. A pellet mill, comprising:
a stationary ring defining a die cavity and having circumferentially and axially spaced die openings;
a carriage carrying a plurality of rollers in said die cavity, said rollers being mounted on axes parallel to an axis of the ring die;
a drive for rotating said carriage about the axis of the ring die;
an inlet for receiving feed material;
a feeder for advancing the feed material toward the die cavity and including an auger and an impeller having circumferentially spaced blades extending in a general axial direction for directing the feed material into nips between the rollers and ring die for extruding pellets of feed material through said openings; and
an outlet for receiving the pellets extruded through the die openings and discharging the pellets from the pellet mill.

10. A pellet mill according to Claim 9 wherein said feeder includes a plurality of conveying blades.

11. A pellet mill according to Claim 9 wherein said drive includes a main driveshaft, a motor for driving the shaft and a torque limiter interposed between the motor and shaft for decoupling the motor from the shaft in response to an overloaded shaft.

12. A pellet mill according to Claim 11 wherein said feeder comprises an auger, a plurality of conveying blades downstream of said auger and an impeller downstream of said conveying blades.
